(19) **Europäisches Patentamt / European Patent Office / Office européen des brevets**

(11) **EP 2 713 680 B1**

(12) **EUROPÄISCHE PATENTSCHRIFT**

(45) Veröffentlichungstag und Bekanntmachung des Hinweises auf die Patenterteilung:
**28.01.2015 Patentblatt 2015/05**

(51) Int Cl.:
*H05B 37/02* (2006.01)    *G06F 13/36* (2006.01)
*H04L 12/40* (2006.01)

(21) Anmeldenummer: **12186395.5**

(22) Anmeldetag: **27.09.2012**

(54) **Verfahren zur Ermittlung der Verfügbarkeit einer Busleitung und Kommunikationssteuereinheit**

Method for the determination of the availability of a bus-line and communication control unit

Méthode pour la détermination de la disponibilité d'une ligne de bus et unité de contrôle de communication

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.04.2014 Patentblatt 2014/14**

(73) Patentinhaber: **Vossloh-Schwabe Deutschland GmbH**
**73660 Urbach (DE)**

(72) Erfinder:
• **Braunschmid, Peter**
**73430 Aalen (DE)**
• **Hinrichs, Elmar**
**73660 Urbach (DE)**

(74) Vertreter: **Rüger, Barthelt & Abel**
**Patentanwälte**
**Webergasse 3**
**73728 Esslingen (DE)**

(56) Entgegenhaltungen:
**WO-A2-2006/010416**    **DE-A1-102008 017 281**
**DE-A1-102010 064 027**

**Beschreibung**

Die Erfindung betrifft ein Verfahren zur Ermittlung der Verfügbarkeit einer Busleitung durch eine daran angeschlossene Kommunikationssteuereinheit. Die Erfindung betrifft auch die erfindungsgemäße Ausgestaltung der Kommunikationssteuereinheit.

Kollisionen zwischen gleichzeitig über die Busleitung übertragenen Nachrichten können Übertragungsfehler verursachen. Dies ist dann der Fall, wenn an die Busleitung mehr als eine Kommunikationssteuereinheit bzw. mehr als ein Teilnehmer angeschlossen ist, die bzw. der zum Senden von Daten berechtigt und eingerichtet ist. Bei der Busleitung handelt es sich insbesondere um eine Zweidrahtleitung. Die übertragenen Daten können in analoger oder digitaler Form vorliegen.

Zur Vermeidung von Kollisionen zwischen übertragenen Nachrichten wird bei der Erfindung die Verfügbarkeit der Busleitung vor oder zu Beginn eines Sendevorgangs geprüft. Dazu kann beispielsweise ein Abfragesignal über eine Sendeschnittstelle an die Busleitung gesendet und über eine Empfangsschaltung die an der Busleitung anliegenden Signale empfangen und mit dem Abfragesignal verglichen werden. Abhängig vom Vergleichsergebnis kann auf die Verfügbarkeit der Busleitung geschlossen werden.

Die fehlerfreie Feststellung der Verfügbarkeit ist allerdings nicht einfach, da sich die Signale auch abhängig von Parametern, insbesondere von der Temperatur, verändern können.

Die Temperaturabhängigkeit beim Übertragen von Daten über eine Busleitung ist in DE 10 2007 013 758 A1 beschrieben. Es kann beispielsweise zu Übertragungsfehlern kommen, wenn die Bitzeiten bei einer digitalen Datenübertragung eine zulässige Toleranz überschreiten. Deswegen wird vorgeschlagen, eine Temperaturinformation innerhalb des Gehäuses der Kommunikationssteuereinheit zu erfassen und die Sendeschnittstelle abhängig von der Temperaturinformation zu steuern, um die Bitzeit anzupassen, so dass die vorgegebene Toleranz nicht überschritten wird. Für dieses Verfahren ist allerdings die Erfassung der Temperatur und eine temperaturabhängige gesteuerte Sendeschnittstelle notwendig.

Aus WO 2006/010416 A2 ist ein Verfahren zur Kontrolle von Übertragungen einer bidirektionalen Schnittstelle bekannt. Der Empfangszweig und der Sendezweig der bidirektionalen Schnittstelle sind über jeweils ein Mittel zur galvanischen Trennung von einem Controller getrennt. Bei dem Verfahren werden die vom Sendezweig gesendeten Daten über den Empfangszweig erfasst. Anhand von definierten Eigenschaften der gesendeten Daten findet eine Auswertung der empfangenen Daten statt, um festzustellen, ob die Daten korrekt durch den Sendezweig der bidirektionalen Schnittstelle versandt wurden. Insbesondere wird die zeitliche Bitlänge der gesendeten Daten als Charakteristikum verwendet. Die empfangenen Daten werden darauf geprüft, ob die Bitlänge, also die zeitliche Dauer eines Bits eines digitalen Datums den vorgegebenen Anforderungen des Übertragungsprotokolls entspricht. Wird ein Fehler erkannt, kann im Sendezweig der bidirektionalen Schnittstelle die Bitzeit durch veränderte Einstellungen angepasst werden, damit die Vorgaben des Kommunikationsprotokolls eingehalten werden.

Eine Ermittlung der Verfügbarkeit der Busleitung vor oder zu Beginn des Sendens von Daten über eine Kommunikationssteuereinheit ist beim oben genannten Stand der Technik nicht vorgesehen.

Es kann als Aufgabe der vorliegenden Erfindung angesehen werden, eine einfache Möglichkeit zur Vermeidung von Kollisionen und dadurch bedingten Übertragungsfehlern auf einer Busleitung zu schaffen. Diese Aufgabe wird durch ein Verfahren mit den Merkmalen des Patentanspruches 1 sowie eine Kommunikationssteuereinheit mit den Merkmalen des Patentanspruches 10 gelöst.

Erfindungsgemäß wird durch die Kommunikationssteuereinheit zunächst eine aktuelle Signallaufzeit bestimmt. Die aktuelle Signallaufzeit ist der Toleranzzeitraum, zwischen dem Beginn des Sendens eines Datums durch die Sendeschnittstelle an die Busleitung und den Empfang dieses Datums von der Busleitung an der Empfangsschnittstelle dieser Kommunikationssteuereinheit. Dadurch wird sozusagen die aktuelle Signallaufzeit der Signalübertragungsstrecke von der Sendeinheit über die Busleitung bis zur Empfangsschnittstelle der Kommunikationssteuereinheit bestimmt. Diese Signallaufzeit kann sich abhängig von Umgebungsparametern und insbesondere abhängig von der Temperatur der Umgebung verändern. Diese Veränderung ist beispielsweise auf das temperaturabhängige Übertragungsverhalten von Bauteilen der Kommunikationssteuereinheit zurückzuführen, insbesondere von Halbleiterbauelementen, beispielsweise von zur galvanischen Trennung eingesetzten Optokopplern. Die ermittelte aktuelle Signallaufzeit kann abgespeichert werden.

Im Anschluss an das Ermitteln der aktuellen Signallaufzeit wird in der Kommunikationssteuereinheit und vorzugsweise in einem Controller eine Signallaufzeitgröße unter Verwendung der aktuellen Signallaufzeit ermittelt. Die Signallaufzeitgröße kann anschließend in einem Speicher abgespeichert werden.

Bei einem Ausführungsbeispiel wird die aktuelle Signallaufzeit zwischen dem Senden und Empfangen einer fallenden Flanke und dem Senden und Empfangen einer steigenden Flanke separat bestimmt und gespeichert. Entsprechend können separat eine Signallaufzeitgröße für die Übertragung fallender Flanken und eine Signallaufzeitgröße für die Übertragung steigender Flanken bestimmt werden.

Die Signallaufzeitgröße wird zur Überprüfung der Verfügbarkeit der Busleitung verwendet. Vor oder zu Beginn eines Sendevorgangs veranlasst die Kommunikationssteuereinheit das Senden eines Abfragesignals über die Sendeschnittstelle an die Busleitung. Der Startzeitpunkt des Sendens des Abfragesignals ist der Zeitpunkt, zu dem die Sendeschnittstelle zum Senden des Abfragesignals veranlasst wird, beispielsweise mit Hilfe des Controllers der Kommunikationssteuereinheit. Nach dem Senden des Abfragesignals wird über die Empfangsschnittstelle dieser Kommunikationssteuereinheit das über die Busleitung übertragene Bussignal empfangen und ausgewertet. Wird das gesendete Abfragesignal innerhalb eines abhängig von der ermittelten Signallaufzeitgröße bestimmten Toleranzzeitraums an der Empfangsschnittstelle direkt empfangen, so erkennt die Kommunikationssteuereinheit die Verfügbarkeit der Busleitung und beginnt mit dem Senden von Daten. Andernfalls wird der Sendeprozess unterbunden bzw. beendet und erst zeitverzögert ein erneuter Sendeversuch unternommen. Die Zeitdauer bis zu einem erneuten Sendeversuch kann in der Kommunikationssteuereinheit vorgegeben sein.

Durch das Überprüfen der Verfügbarkeit der Busleitung werden Kollisionen zwischen zwei sendenden Kommunikationssteuereinheiten an der Busleitung und daher Übertragungsfehler vermieden. Diese Verfügbarkeitsprüfung ist äußerst zuverlässig, da Umgebungsparameter, wie insbesondere die Temperatur, die sich auf die Signallaufzeit auswirken können, berücksichtigt werden. Ein unmittelbares Bestimmen der Umgebungsparameter ist allerdings nicht erforderlich.

Vor dem Beginn des Sendens zum Startzeitpunkt kann geprüft werden, ob sich die Busleitung in einem Bereitschaftszustand befindet. Dieser Bereitschaftszustand wird beispielsweise erkannt, wenn das an der Busleitung anliegende Bussignal einem vorgegebenen Wert entspricht, z.B. dem digitalen Wert "High" entspricht.

Es ist vorteilhaft, wenn geprüft wird, ob die aktuelle Signallaufzeit zumindest so groß ist wie eine vorgegebene oder ermittelte Mindestverzögerungsdauer. Dadurch lässt sich sicherstellen, dass die steigende oder fallende Flanke des Empfangssignals tatsächlich durch eine steigende oder fallende Flanke des Sensesignals derselben Kommunikationssteuereinheit verursacht wurde und nicht durch die Veränderung des Bussignals durch einen anderen an die Busleitung angeschlossenen Teilnehmer.

Bei einem Ausführungsbeispiel ist der für die Überprüfung der Verfügbarkeit der Busleitung verwendete Toleranzzeitraum zusätzlich von der Sendedauer des Abfragesignals abhängig, die insbesondere fest in der Kommunikationssteuereinheit vorgegeben ist. Vorzugsweise wird als Abfragesignal ein digitales Signal verwendet, das lediglich ein oder zwei Bit aufweisen kann.

Vorteilhafterweise wird wiederholt und insbesondere bei jedem Sendevorgang durch die Kommunikationssteuereinheit die aktuelle Signallaufzeit ermittelt. Dadurch ist sichergestellt, dass stets ein aktueller Wert für die Signallaufzeit vorhanden ist, der von den aktuell herrschenden Umgebungsbedingungen abhängt und diese Umgebungsbedingungen berücksichtigt.

Es ist außerdem möglich, aus mehreren Signallaufzeiten, die bei verschiedenen Sendevorgängen ermittelt wurden, durch eine Filterung und/oder Mittelwertbildung die Signallaufzeitgröße zu ermitteln. Die gespeicherte Signallaufzeitgröße wird dabei bei jeder Messung einer aktuellen Signallaufzeit neu ermittelt bzw. aktualisiert. Durch eine Filterung und/oder Mittelwertbildung kann vermieden werden, dass einzelne größere Abweichungen, die beispielsweise auch durch Kollisionen von gleichzeitigen Verfügbarkeitsabfragen durch mehrere Kommunikationssteuereinheiten hervorgerufen werden können, ein zu starkes Gewicht erhalten.

Vorzugsweise wird die Mittelwertbildung als gleitende Mittelwertbildung ausgeführt. Die einzelnen jeweils aktuellen Signallaufzeiten, die zur Berechnung der Signallaufzeitgröße herangezogen werden, werden gewichtet. Die Wichtung kann beispielsweise linear oder exponentiell ausgeführt sein. Durch die Wichtung werden die Signallaufzeiten bei der Mittelwertbildung umso stärker berücksichtigt, je geringer ihr zeitlicher Abstand zum aktuellen Zeitpunkt ist.

Die Mittelwertbildung kann beispielsweise durch die Verwendung eines Tiefpassfilters durchgeführt werden. Bei dem zur Mittelwertbildung verwendeten Filter handelt es sich vorzugsweise um ein digitales FIR-Filter.

Die erfindungsgemäße Kommunikationssteuereinheit weist einen Controller auf, der die Sendeschnittstelle und die Empfangsschnittstelle der Kommunikationssteuereinheit ansteuert. Es ist dabei möglich, dass die Sendeschnittstelle und die Empfangsschnittstelle als kombinierte bidirektionale Schnittstelle ausgestaltet sind. Der Controller ist zur Durchführung des oben beschriebenen Verfahrens eingerichtet. Zum Abspeichern der Signallaufzeitgröße und/oder der bei mehreren Übertragungsvorgängen jeweils gemessenen Signallaufzeit kann der Controller mit einem Speicher verbunden sein. Um den Controller von der Busleitung galvanisch zu trennen, weist sowohl die Empfangsschnittstelle, als auch die Sendeschnittstelle vorzugsweise jeweils einen Optokoppler auf.

Die Kommunikationssteuereinheit bzw. deren Controller ist insbesondere dazu eingerichtet, Daten anhand des DALI-Übertragungsprotokolls über die Busleitung zu übermitteln. Diese Daten können über die Busleitung an Leuchtenmodule mit einem ansteuerbaren Vorschaltgerät übermittelt werden, um diese zu steuern.

Vorteilhafte Ausgestaltungen der Erfindung ergeben sich aus den abhängigen Patentansprüchen sowie der Beschreibung. Die Beschreibung beschränkt sich auf wesentliche Merkmale der Erfindung. Die Zeichnung ist ergänzend heranzuziehen. Nachfolgend werden Ausführungsbeispiele der Erfindung anhand der beigefügten Zeichnung im Einzelnen erläutert. Es zeigen:

Figur 1 eine blockschaltbildähnliche Darstellung eines Bussystems mit einer Busleitung und mehreren daran angeschlossenen Kommunikationssteuereinheiten,

Figur 2 einen schematischen, beispielhaften Signalverlauf an einem Sendeanschluss der Sendeschnittstelle, an der Busleitung und an einem Empfangsanschluss der Empfangsschnittstelle einer Kommunikationseinrichtung,

Figur 3 ein Blockschaltbild eines Ausführungsbeispiels zur Überprüfung der Verfügbarkeit der Busleitung für das Senden von Daten durch eine Kommunikationssteuereinheit und

Figur 4 ein Ausführungsbeispiel einer Kommunikationssteuereinrichtung gemäß der vorliegenden Erfindung.

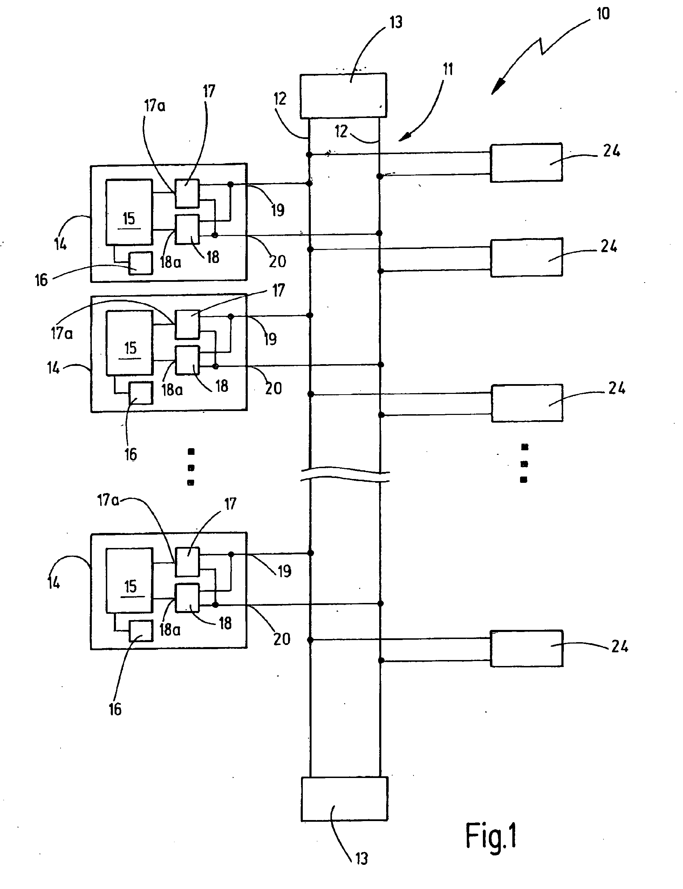

In Figur 1 ist schematisch ein Kommunikationssystem 10 mit einer Busleitung 11 veranschaulicht, die beispielsgemäß als Zweidrahtleitung ausgeführt ist. Die Busleitung 11 weist somit zwei Adern 12 auf. Die Busleitung ist 11 über Busabschlusseinheiten 13 abgeschlossen, um Reflexionen am Busleitungsende zu vermeiden. Die Busleitung 11 kann auch an eine Spannungs- bzw. Stromversorgung angeschlossen sein.

An die Adern 12 der Busleitung 11 ist wenigstens eine und sind beispielsgemäß mehrere Kommunikationssteuereinheiten 14 angeschlossen. Jede Kommunikationssteuereinheit 14 weist einen Controller 15 auf, der mit einem Speicher 16 verbunden ist. Außerdem steuert der Controller 15 eine Sendeschnittstelle 17, sowie eine Empfangsschnittstelle 18 der Kommunikationssteuereinheit 14. Hierfür ist der Controller 15 mit einem Sendeanschluss 17a der Sendeschnittstelle 17 und mit einem Empfangsanschluss 18a der Empfangsschnittstelle 18 verbunden.

Sowohl die Sendeschnittstelle 17, als auch die Empfangsschnittstelle 18 sind jeweils mit beiden Busanschlüssen 19, 20 der Kommunikationssteuereinheit 14 verbunden. Jeder Busanschluss 19, 20 ist mit jeweils einer Ader 12 der Busleitung 11 verbunden.

An die Busleitung 11 sind außerdem Teilnehmer angeschlossen, die beim Ausführungsbeispiel durch Leuchtenmodule gebildet sein können. Die Teilnehmer 24 werden durch die wenigstens eine Kommunikationssteuereinheit 14 angesteuert. Hierzu überträgt die Kommunikationssteuereinheit 14 Daten über die Busleitung 11 zu einem oder mehreren der Teilnehmer 24. Beispielsgemäß sind diese als Leuchtenmodule ausgestaltet und weisen jeweils ein ansteuerbares Vorschaltgerät und wenigstens ein davon gesteuertes Leuchtmittel auf.

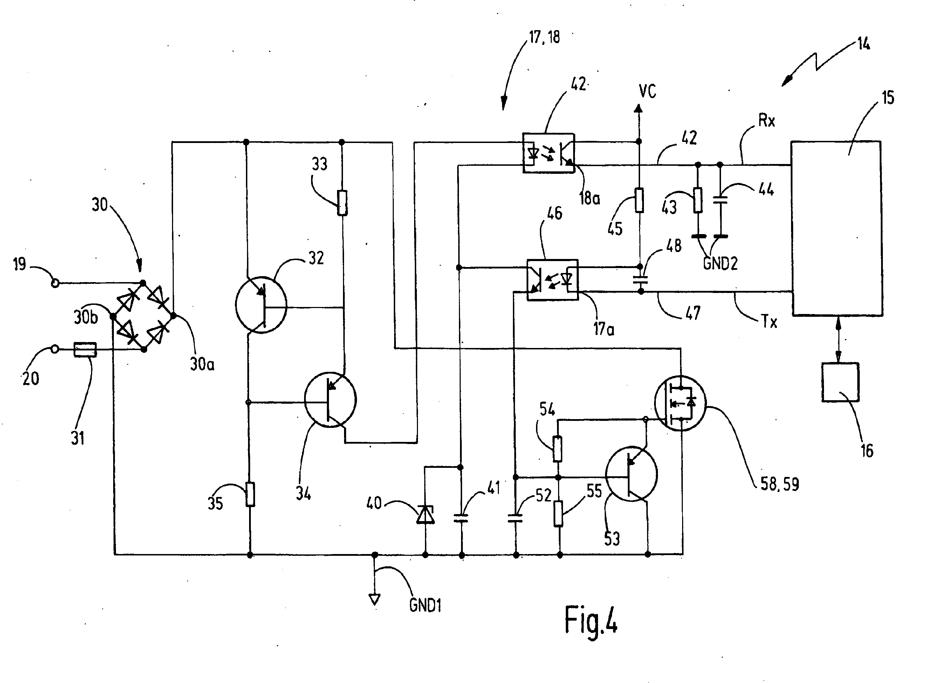

In Abwandlung zur blockschaltbildähnlichen Darstellung nach Figur 1 kann die Sendeschnittstelle 17 und die Empfangsschnittstelle 18 auch als kombinierte bidirektionale Schnittstelle 17, 18 ausgeführt sein, wie dies beim Ausführungsbeispiel der Kommunikationssteuereinheit 14 nach Figur 4 dargestellt und später im Einzelnen erläutert wird.

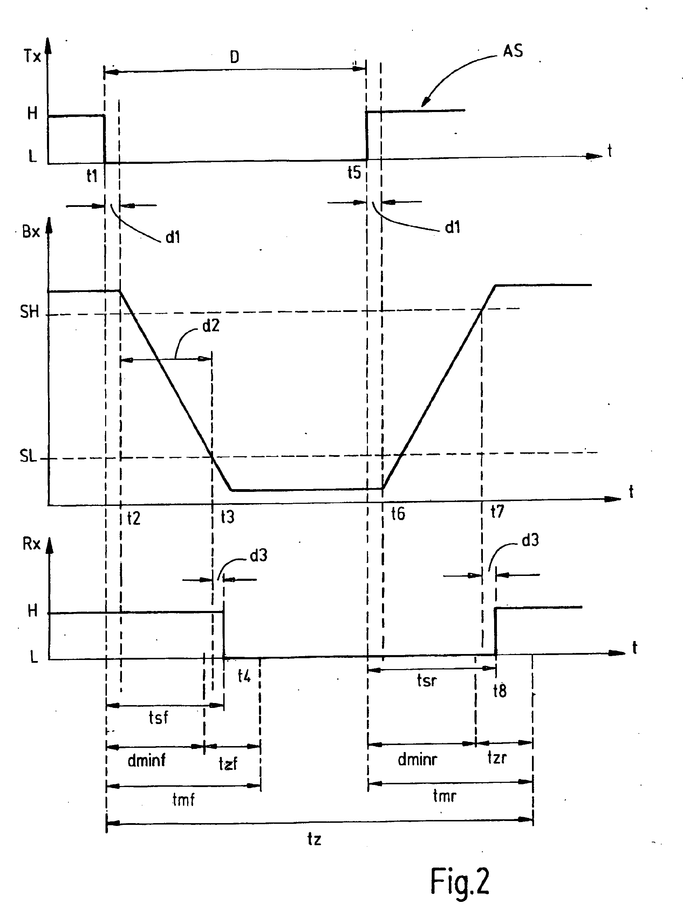

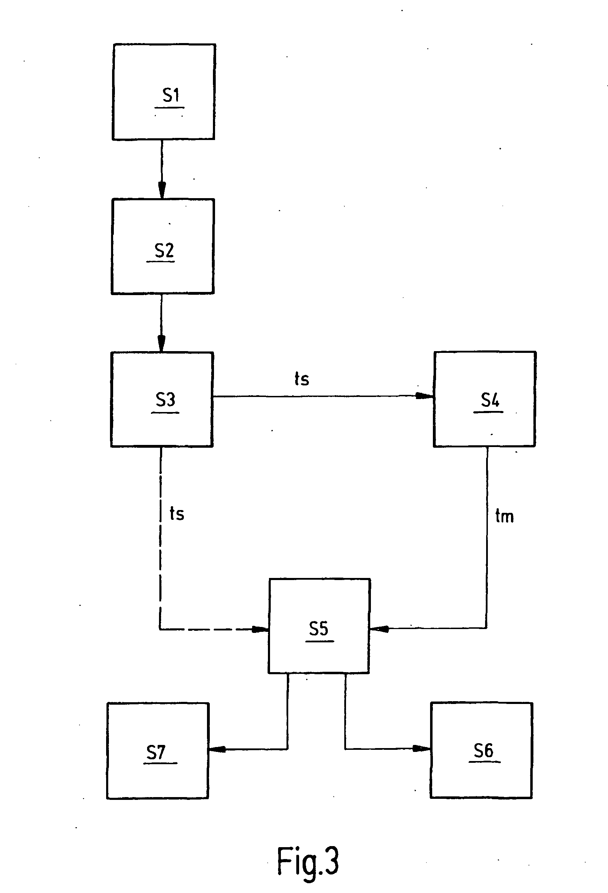

Mit Hilfe des Controllers 15 führt die Kommunikationssteuereinheit 14 vor dem Senden bzw. Übertragen von Daten über die Busleitung 11 eine Prüfung durch, ob die Busleitung 11 verfügbar ist oder eine andere Kommunikationssteuereinheit 14 die Busleitung 11 zur Datenübertragung beansprucht. Die Verfügbarkeitsprüfung wird anhand der Figuren 2 und 3 erläutert. Bei dem hier beschriebenen Beispiel werden digitale Signale über die Busleitung 11 übertragen. Die digitalen Daten werden durch Änderungen des Spannungswertes gebildet, könnten alternativ aber auch durch Änderungen des Stromwertes gebildet sein.

Bei jedem Senden eines Datums über die Busleitung 11 ermittelt die Kommunikationssteuereinheit 14 eine aktuelle Signallaufzeit ts. Die aktuelle Signallaufzeit ts ist die Zeitdauer zwischen dem Beginn einer Sendeanforderung durch den Controller 15 am Sendeanschluss 17a der Sendeschnittstelle 17 und dem Empfang des betreffenden gesendeten Datums am Empfangsanschluss 18a der Empfangsschnittstelle 18. Es wird somit die aktuelle Signallaufzeit ts der Signalübertragungsstrecke bestimmt, wobei die Signalübertragungsstrecke durch die Sendeschnittstelle 17, die Busleitung 11 und die Empfangsschnittstelle 18 der Kommunikationssteuereinheit 14 gebildet ist. Hierfür kann prinzipiell jede Art von Datum verwendet werden, das über die Sendeschnittstelle 17 der Kommunikationssteuereinheit 14 übertragen wird.

Bei dem in Figur 2 schematisch veranschaulichten Beispiel legt der Controller 15 an den Sendeanschluss 17a ein digitales Sendesignal Tx an, das zu einem Startzeitpunkt t1 eine fallende Flanke von "High" (H) nach "Low" (L) ·aufweist. Das Bussignal Bx hat zum Startzeitpunkt t1 den Wert "High" (H), was beim Beispiel einer verfügbaren Busleitung entspricht. Nach einer ersten Zeitdauer d1, der durch die Bauteile der Sendeschnittstelle 17 verursacht ist, beginnt der Spannungswert des Bussignals Bx ab einem zweiten Zeitpunkt t2 zu sinken. Nach einer zweiten Zeitdauer d2 ab dem zweiten Zeitpunkt t2 unterschreitet der Spannungswert des Bussignals Bx zu einem dritten Zeitpunkt t3 einen unteren Schwellenwert SL, der den maximalen Spannungswert zur Erkennung des digitalen Pegels "Low" darstellt. Zwischen dem Erreichen dieses unteren Schwellenwerts SL durch das Bussignal Bx bis zu einem vierten Zeitpunkt t4 vergeht eine dritte Zeitdauer d3, die durch die Bauteile der Empfangsschnittstelle 18 bedingt ist. Erst zum vierten Zeitpunkt t4 hat das am Empfangsanschluss 18a anliegende Empfangssignal Rx eine abfallende Flanke. Zum vierten Zeitpunkt t4 erkennt der Controller 15, dass die fallende Flanke von "High" nach "Low" des Sendesignals Tx empfangen wurde. Die aktuelle Signallaufzeit tsf für die fallende Flanke ergibt sich aus der Zeitdifferenz zwischen dem vierten Zeitpunkt t4 und dem Startzeitpunkt t1.

Zu einem fünften Zeitpunkt t5 hat das Sendesignal Tx beispielsgemäß wieder eine steigende Flanke von "Low" L nach "High" (H). Ab dem fünften Zeitpunkt t5 durch die erste Zeitdauer d1 zeitverzögert steigt der Spannungswert des Bussignals Bx ab einem sechsten Zeitpunkt t6 an. Zu einem siebten Zeitpunkt erreicht der Spannungswert des Bussignals Bx einen oberen Schwellenwert SH, so dass das Bussignal Bx den Wert "High" (H) annimmt. Zu einem achten Zeitpunkt t8 nach Ablauf der dritten Zeitdauer d3 ab dem siebten Zeitpunkt t7 hat das Empfangssignal Rx eine steigende Flanke von "Low" (L) nach "High" (H). Die Zeitdifferenz zwischen dem achten Zeitpunkt t8 und dem fünften Zeitpunkt t5 entspricht der aktuellen Signallaufzeit tsr für die steigende Flanke.

Erfindungsgemäß wird durch den Controller 15 der Kommunikationssteuereinheit 14 unter Verwendung zumindest der zuletzt gemessenen aktuellen Signallaufzeit tsf bzw. tsr eine Signallaufzeitgröße tmf bzw. tmr ermittelt. Beim Ausführungsbeispiel werden hierfür mehrere, bei unterschiedlichen Sende- und Empfangsvorgängen gemessene, Signallaufzeiten tsf bzw. tsr verwendet und daraus jeweils eine Signallaufzeitgröße tmf bzw. tmr ermittelt, beispielsweise durch gleitende Mittelwertbildung. Bei dieser gleitenden Mittelwertbildung werden mehrere gemessene Werte der Signallaufzeit gewichtet, beispielsweise linear oder exponentiell gewichtet, und daraus ein Mittelwert als Signallaufzeitgröße tm berechnet. Je größer der zeitliche Abstand des Messzeitpunktes einer Signallaufzeit tsf, tsr vom aktuellen Zeitpunkt ist, desto geringer wird er bei der gleitenden Mittelwertbildung berücksichtigt, was beispielsgemäß durch einen entsprechend kleinen Wichtungsfaktor erfolgt.

Die Signallaufzeiten tsf, tsr und/oder die aktuellen Signallaufzeitgröße tmf, tmr werden beispielsgemäß separat für die steigenden und fallenden Signalflanken ermittelt und abgespeichert.

Diese Signallaufzeitgröße tmf, tmr wird im Speicher 16 der Kommunikationssteuereinheit 14 abgespeichert. Dort können auch die zuletzt gemessene aktuelle Signallaufzeit und beispielsgemäß mehrere gemessene Signallaufzeiten zur Mittelwertbildung abgespeichert werden.

Die durch Mittelwertbildung erhaltene Signallaufzeitgröße wird dazu verwendet, die Verfügbarkeit der Busleitung 11 zu prüfen. Das Blockschaltbild nach Figur 3 zeigt einen beispielhaften Ablauf für die Prüfung der Verfügbarkeit der Busleitung 11.

In einem ersten Schritt S1 veranlasst der Controller 15 die Sendeschnittstelle 17 mit dem Senden eines Abfragesignals AS zum Startzeitpunkt t1. Das in Figur 2 dargestellte Sendesignal Tx mit einer fallenden Flanke von "High" H nach "Low" L zum Startzeitpunkt und einer ansteigenden Flanke von "Low" L nach "High" H nach Ablauf einer Sendedauer D wird beispielsgemäß als Abfragesignal AS verwendet. Die Sendedauer D ist fest in Speicher 16 vorgegeben.

Im zweiten Schritt S2 wird das an der Busleitung 11 anliegende Bussignal Bx über die Empfangsschnittstelle 18 empfangen. Anschließend wird im dritten Schritt S3 die aktuelle Signallaufzeit tsf wie zuvor beschrieben durch den Controller 15 ermittelt. Die aktuelle Signallaufzeit tsf wird im Speicher 16 abgelegt.

Anschließend wird im Controller 15 beispielsweise durch eine Tiefpassfilterung und beim Ausführungsbeispiel durch gleitende Mittelwertbildung die Signallaufzeitgröße tmf, tmr aus mehreren gespeicherten Signallaufzeiten tsf, tsr ermittelt und im Speicher 16 abgespeichert.

In einem fünften Schritt S5 wird ein Zeitvergleich durchgeführt, um festzustellen, ob das Abfragesignal AS durch die Empfangsschnittstelle 18 innerhalb eines aus der berechneten Signallaufzeitgröße tmf, tmr ermittelten Toleranzzeitraums tz empfangen wurde.

Bei einem Ausführungsbeispiel bedeutet diese Prüfung, dass innerhalb des Toleranzzeitraums tz sowohl die abfallende Flanke, als auch die ansteigende Flanke des Abfragesignal AS am Empfangsanschluss 18a anliegen muss. Der Toleranzzeitraum tz ergibt sich beim Ausführungsbeispiel aus der Summe der Sendedauer D und der Signallaufzeitgröße tmr, wie dies in Figur 2 veranschaulicht ist. Alternativ hierzu kann der Toleranzzeitraum tzf, tzr auch unabhängig von der Sendedauer bestimmt werden und beispielsweise durch die jeweils zugeordnete Signallaufzeitgröße tmf, tmr und eine jeweilige zulässige Zeitabweichung dtf bzw. dtr bestimmt sein. Im fünften Schritt S5 wird dann bei der Übertragung einer fallenden Flanke geprüft, ob die zuletzt gemessene aktuelle Signallaufzeit tmf kleiner ist als die Signallaufzeitgröße tmf für die fallende Flanke plus der zulässigen Zeitabweichung dtf:

$$tsf < tmf + dtf \ ?$$

Bei der Übertragung einer steigenden Flanke kann analog hierzu im fünften Schritt S5 geprüft werden, ob die zuletzt gemessene aktuelle Signallaufzeit tmr kleiner ist als die Signallaufzeitgröße tmr für die steigende Flanke plus der zulässigen Zeitabweichung dtr:

$$tsr < tmr + dtr \ ?$$

Bei dem in Figur 2 dargestellten beispielhaften Verlauf des Empfangssignals Rx am Empfangsanschluss 18a wird das Abfragesignal AS innerhalb des Toleranzzeitraums tz richtig empfangen. In diesem Fall wird daraus geschlossen, dass die Busleitung 11 für das Senden von Daten verfügbar ist und der Sendevorgang wird in einem sechsten Schritt S6 fortgesetzt.

Andernfalls, wenn das Empfangssignal Rx erst nach Ablauf des Toleranzzeitraums tz eine ansteigende Flanke aufweist, wird daraus geschlossen, dass überlappend zum Senden des Anforderungssignals AS eine andere an die Busleitung 11 angeschlossene Kommunikationssteuereinheit 14 ebenfalls ein Anforderungssignal AS oder andere Daten versandt hat und deswegen das Bussignal Bx erst zeitverzögert eine ansteigende Flanke aufweist oder durch ein gleichzeitig durch eine andere, an den Kommunikationsbus angeschlossene Kommunikationseinheit der Bus zuerst auf "Low" gezogen wurde. Dies ist beispielsweise dann der Fall, wenn zwischen dem Startzeitpunkt t1 und dem siebten Zeitpunkt t7 eine andere Kommunikationssteuereinheit ein Anforderungssignal AS an die Busleitung 11 anlegt. Als Folge davon wird das Empfangssignal Rx nicht innerhalb des Toleranzzeitraums tz korrekt empfangen und das Senden wird in einem siebten Schritt S7 abgebrochen. Ein erneuter Sendevorgang kann beispielsweise nach Ablauf einer vorgegebenen Zeitspanne erneut durch Aussenden eines Abfragesignals AS gestartet werden.

Um sicherzustellen, dass die zum vierten Zeitpunkt t4 vorhandene fallende Flanke des Empfangssignals Rx auch tatsächlich der fallenden Flanke des Sendesignal Tx zum Startzeitpunkt t1 zuzuordnen ist und nicht durch ein anderes Signal auf Busleitung 11 verursacht wurde, kann geprüft werden, ob die aktuelle Signallaufzeit tsf für die fallende Flanke zwischen dem Startzeitpunkt t1 und dem vierten Zeitpunkt t4 gleich groß ist wie oder größer ist als eine Mindestverzögerungsdauer dminf für die Übertragung einer fallenden Flanke. Nur wenn diese Bedingung erfüllt ist, kann auf eine Verfügbarkeit der Busleitung 11 geschlossen werden.

Die Mindestverzögerungsdauer dminf kann fest vorgegeben sein, wird aber vorzugsweise abhängig von der ermittelten Signallaufzeitgröße tmf und/oder wenigstens einer zuvor ermittelten Signallaufzeit tsf berechnet.

Es ist auch möglich diese Abfrage entsprechend für die Übertragung einer steigenden Flanke durchzuführen und eine Mindestverzögerungsdauer dminr für die Übertragung einer steigenden Flanke vorzugeben oder zu ermitteln.

Bei einem abgewandelten Ausführungsbeispiel wird bei jeder Zustandsänderung des Sendesignals Tx und der zugeordneten Zustandsänderung des Empfangssignals Rx eine aktuelle Signallaufzeit tsf, tsr ermittelt. In einem solchen Fall kann im fünften Schritt S5 auch direkt die aktuelle Signallaufzeit tsf, tsr mit der jeweils zugeordneten Signallaufzeitgröße tmf, tmr verglichen werden. Die Busleitung 11 ist dann verfügbar, wenn die Zeitdauer der aktuellen Signallaufzeit tsf, tsr nicht größer ist als die Signallaufzeitgröße tmf, tmr. Andernfalls wird auf eine Kollision beim Senden geschlossen und das Senden im siebten Schritt S7 abgebrochen.

Wie anhand von Figur 2 erläutert, werden beispielgemäß digitale Daten über die Busleitung 11 übertragen. Das digitale Abfragesignal AS kann lediglich aus einem oder zwei Bit bestehen. Beispielsgemäß erfolgt die Übertragung der Informationen bzw. eines digitalen Datensignals anhand der Manchester-Codierung. Eine von "High" H nach "Low" L abfallende Flanke entspricht dem digitalen Wert "1", wohingegen eine von "Low" L nach "High" H ansteigende Flanke dem digitalen Wert "0" entspricht. Der obere Schwellenwert SH kann z.B. 11,5 Volt und der untere Schwellenwert SL kann beispielsweise 4,5 Volt betragen.

Ein Blockschaltbild eines Ausführungsbeispiels einer Kommunikationssteuereinheit 14 ist in Figur 4 dargestellt.

Die beiden Busanschlüsse 19, 20 sind an einen Gleichrichter 30 mit vier Dioden in an sich bekannter Weise angeschlossen. Über den Gleichrichter 30 ist sichergestellt, dass ein Busanschluss 19 bzw. 20 mit einer beliebigen Ader 12 der Busleitung 11 verbunden werden kann, so dass sozusagen ein Verpolungsschutz erreicht ist. Zwischen dem Gleichrichter 30 und einem der Busanschlüsse 19, 20 kann eine Sicherung 31 zwischengeschaltet sein. Der dem geringeren Potenzial zugeordnete zweite Anschluss 30b des Gleichrichters 30 ist mit einer ersten Masse GND1 verbunden. Der andere, erste Anschluss 30a höheren Potenzials des Gleichrichters 30 ist mit dem Emitter eines ersten pnp-Transistors und über einen ersten Widerstand 33 mit dem Emitter eines zweiten Transistors 34 verbunden, der ebenfalls als pnp-Transistor ausgeführt ist. Der Emitter des zweiten Transistors 34 ist mit der Basis des ersten Transistors 32 verbunden. Der Kollektor des ersten Transistors 32 ist über einen zweiten Widerstand 35 mit der ersten Masse GND1 und außerdem unmittelbar mit der Basis des zweiten Transistors 34 verbunden. Die beiden Transistoren 32, 34 und die Widerstände 33, 35 dienen zur Strombegrenzung des Stromes von der Busleitung 11 zur Empfangsschnittstelle 17 bzw. zur bidirektionale Schnittsetelle 17, 18.

Der Kollektor des zweiten Transistors 34 ist mit der Anode der Diode der Primärseite eines ersten Optokopplers 39 verbunden. Die Kathode dieser Diode des ersten Optokopplers 39 ist über eine Parallelschaltung aus einer Zenerdiode 40 und einem ersten Kondensator 41 mit der ersten Masse GND1 verbunden. Der sekundärseitig vorhandene Transistor des ersten Optokopplers 39 ist mit seinem Kollektor mit einer Bezugsspannung VC, beispielsweise eine Gleichspannung von etwa 3 Volt, verbunden. Der Emitter dieses Transistors stellt den Empfangsanschluss 18a dar und ist mit dem Controller 15 über eine Empfangsleitung 42 verbunden. Zwischen der Empfangsleitung 42 und einer zweiten Masse GND2 kann ein dritter Widerstand 43 und/oder ein zweiter Kondensator 44 parallel zueinander geschaltet sein.

Die Versorgungsspannung VC ist über einen vierten Widerstand 45 mit der Anode der Primärseite eines zweiten Optokopplers 46 verbunden. Der Kathodenanschluss der primärseitigen Diode des zweiten Optokopplers 46 bildet den Sendeanschluss 17a, der über eine Sendeleitung 47 mit dem Controller 15 verbunden ist. Parallel zur primärseitigen Diode des zweiten Optokopplers 46 ist ein dritter Kondensator 48 geschaltet.

Der erste Optokoppler 39 dient bei der kombinierten Sende- und Empfangsschnittstelle 17, 18 nach Figur 4 zur empfangsseitigen galvanischen Trennung des Controllers 15 von der Busleitung 11 bzw. den Busanschlüssen 19, 20 und der zweite Optokoppler 46 dient zur sendeseitigen Trennung des Controllers 15 von den Busanschlüssen 19, 20.

Der sekundärseitige Transistor des zweiten Optokopplers 46 ist mit seinem Kollektor mit der Kathode der primärseitigen Diode des ersten Optokopplers 29 verbunden. Der Emitter des sekundärseitigen Transistors des zweiten Optokopplers 46 ist über einen vierten Kondensator 52 mit der erste Masse GND1 und mit der Basis eines dritten Transistors 53 verbunden, der beispielsgemäß als pnp-Transistor ausgestaltet ist. Der Emitter dieses dritten Transistors 53 ist über einen Spannungsteiler aus einem fünften Widerstand 54 und einem sechsten Widerstand 55 mit der ersten Masse GND1 verbunden. Außerdem ist der Mittenabgriff zwischen dem fünften und dem sechsten Widerstand mit der Basis des dritten Transistors 43 verbunden. Der Kollektor des dritten Transistors 53 liegt auf der ersten Masse GND1.

Zwischen dem ersten Anschluss 30a und dem zweiten Anschluss 30b des Gleichrichters 30 ist ein gesteuerter Schalter 58 vorhanden, der beispielsgemäß als Feldeffekttransistors 59 ausgeführt ist. Bei dem in Figur 4 veranschaulichten Beispiel handelt es sich um einen n-Kanal MOSFET vom Anreicherungstyp. Das Gate dieses Feldeffekttransistors 59 ist mit dem Emitter des dritten Transistors 53 verbunden. Der Drain-Anschluss ist mit Potenzial des Gleichrichters 30 und der Source-Anschluss des Feldeffekttransistors 59 ist mit der ersten Masse GND1 verbunden. Über den gesteuerten Schalter 58 und beispielsgemäß den Feldeffekttransistor 59 können die beiden Busanschlüsse 19, 20 niederohmig miteinander verbunden und sozusagen kurzgeschlossen werden.

Die Kommunikationsschnittstelle 14 nach Figur 4 arbeitet im Prinzip wie folgt:

Weist das Bussignal BX, also der Spannungswert zwischen den beiden Adern 12 der Busleitung 11 einen dem Wert "High" H entsprechenden Spannungswert auf, wird die Sekundärseite des ersten Optokopplers 39 leitend, so dass der Empfangsanschluss 18a mit der Versorgungsspannung VC verbunden ist. Das über die Empfangsleitung 42 an dem Controller 15 übermittelte Empfangssignal Rx entspricht dadurch ebenfalls dem digitalen Wert High H. Ist die Spannung zwischen den Adern 12 der Busleitung 11 gering oder gleich null, sperrt der erste Optokoppler 39, so dass das Potenzial der Empfangsleitung 42 dem Massepotenzial der zweiten Masse GND2 entspricht, so dass das Empfangssignal Rx dem digitalen Wert "Low" L entspricht.

Es sei nun angenommen, dass das Sendesignal Tx eine abfallende Flanke von "High" H nach "Low" L aufweist. Dadurch wird der zweite Optokoppler 46 leitend. Dies hat zur Folge, dass sich die Spannung an der Basis des dritten Transistors 53 ansteigt und der dritte Transistor 53 in seinen sperrenden Zustand übergeht. Die Spannung am Gate des Feldeffekttransistors 49 vergrößert sich dabei und dieser wird leitend. Folglich hat das Bussignal Bx ebenfalls eine abfallende Flanke. Wird nachfolgend das Sendesignal Tx wieder von "Low" L nach "High" H geschaltet, sperrt der zweite Optokoppler 46. Die Spannung am Gate des Feldeffekttransistors 49 sinkt wieder, und der Feldeffekttransistor 49 geht in seinen sperrenden Zustand über. Dies führt zu einer ansteigenden Flanke des Bussignals Bx entsprechend dem Sendesignal Tx.

Über den vierten Kondensator 52, den dritten Transistor 53 und den Feldeffekttransistor 59 ist die Flankensteilheit des Bussignals Bx vorgegeben.

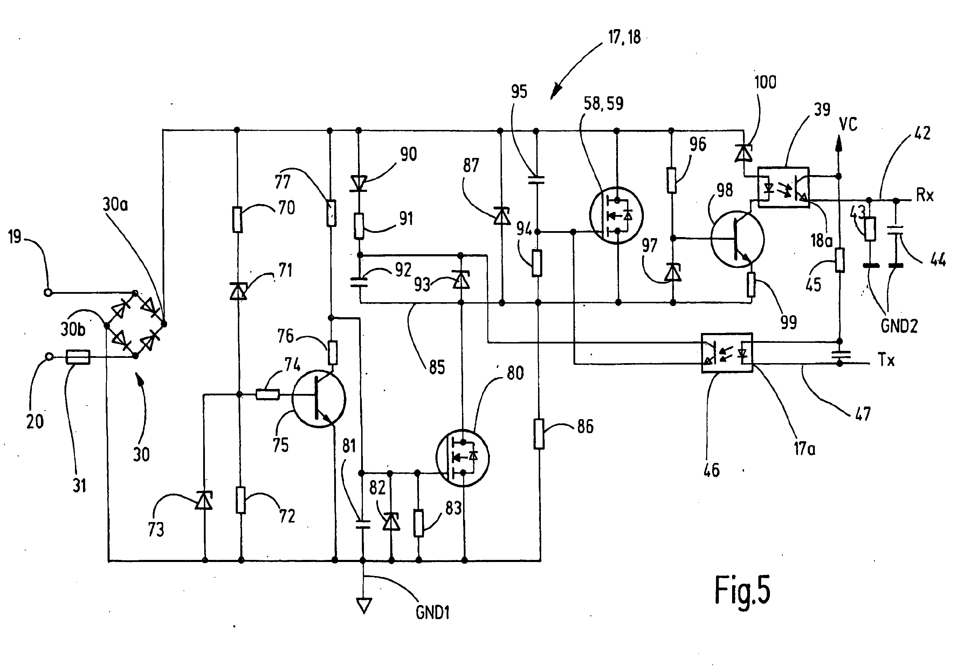

In Figur 5 ist eine alternative Ausführungsform für eine kombinierte Schnittstelle 17, 18 veranschaulicht. Gleiche Bauteile sind mit gleichen Bezugszeichen versehen, wie beim Ausführungsbeispiel gemäß Figur 4. Die an die Empfangsleitung 42 und an die Sendeleitung 47 angeschlossene Kommunikationssteuereinheit 15 sowie der Speicher 16 sind in Figur 5 der Übersicht wegen nicht dargestellt. Die Beschaltung zwischen dem Controller 15 und den Optokopplern 39, 46 ist beispielsgemäß identisch zur Ausführungsform nach Figur 4.

Zwischen den beiden Anschlüssen 30a und 30b des Gleichrichters 30 ist eine Reihenschaltung aus einem siebten Widerstand 70, einer zweiten Zenerdiode 71 und einem achten Widerstand 72 geschaltet. Parallel zum achten Widerstand 72 ist eine dritte Zenerdiode 73 geschaltet. Die Verbindung zwischen dem achten Widerstand 72 und der zweiten Zenerdiode 71 ist über einen neunten Widerstand 74 mit der Basis eines vierten Transistors 75 verbunden. Der vierte Transistor 75 ist als Bipolartransistor und beispielsgemäß als npn-Bipolartransistor ausgestaltet. Sein Emitter ist mit der ersten Masse GND1 verbunden. Der Kollektor dieses vierten Transistors 75 ist über einen zehnten Widerstand 76 und einen elften Widerstand 77 mit dem ersten Anschluss 30a des Gleichrichters verbunden.

Die Verbindung zwischen dem zehnten und dem elften Widerstand 76, 77 ist außerdem mit dem Steuereingang eines Schutztransistors 80 verbunden, der beispielsgemäß als Feldeffekttransistor ausgeführt ist. Der Steuereingang wird dabei durch das Gate des Feldeffekttransistors gebildet. Zwischen dem Steuereingang bzw. dem Gate des Schutztransistors 80 und der ersten Masse GND1 ist eine Parallelschaltung aus einem fünften Kondensator 81, einer vierten Zenerdiode 82 und einem zwölften Widerstand 83 geschaltet.

Über die beiden weiteren Anschlüsse des Schutztransistors 80, beispielsgemäß die Anschlüsse Drain und Source kann abhängig vom Schaltzustand eine Verbindung zwischen einer Zwischenleitung 85 und der ersten Masse GND1 hergestellt werden. Parallel zum Schutztransistor 80 ist ein Schutzwiderstand 86 geschaltet, der die Zwischenleitung 85 mit der ersten Masse GND1 verbinden. In Reihe zum Schutzwiderstand 86 ist eine Schutzdiode 87 geschaltet, die die Zwischenleitung 85 mit dem ersten Anschluss 30a des Gleichrichters 30 verbindet und als Zenerdiode ausgeführt ist.

Der bisher beschriebene Schaltungsteil mit dem vierten Transistor 75 und dem Schutztransistor 80 sowie der Schutzdiode 87 und dem Schutzwiderstand 86 dient dazu, die übrige Schaltung und insbesondere die Empfängerschnittstelle 17 vor zu hohen Busspannungen an der Busleitung 11 zu schützen und arbeitet wie folgt:

Liegt am Bus eine Busspannung mit Gleichspannungswerten an, die einen zulässigen Grenzwert nicht überschreiten, so sperrt der vierte Transistor 75. Die Spannung am Steuereingang bzw. Gate des Schutztransistors 80 ist ausreichend groß, so dass dieser leitet und den Schutzwiderstand 86 kurzschließt. Die Zwischenleitung 85 hat somit im Wesentlichen dasselbe Potenzial wie die erste Masse GND1. Nimmt die Busspannung unzulässig hohe Gleichspannungswerte an, wird der vierte Transistor 75 in seinen leitenden Zustand umgeschaltet, wodurch die Spannung am Steuereingang bzw. Gate des Schutztransistors 80 sinkt. Dieser Schutztransistor 80 geht dadurch in seinen sperrenden Zustand über. Die Spannung zwischen dem ersten Anschluss 30a des Gleichrichters und der Zwischenleitung 85 der kombinierten Schnittstelle 17, 18 wird durch die Schutzdiode 87 (Zenerdiode) begrenzt. Da der Schutztransistor 80 sperrt, kann der über die Zenerspannung der Schutzdiode 87 hinausgehende Betrag der Busleitungsgleichspannung zwischen der Zwischenleitung 85 und der ersten Masse GND1 am Schutzwiderstand 86 anliegen. Auf diese Weise wird die Spannung zwischen dem ersten Anschluss 30a und der Zwischenleitung 85 der kombinierten Schnittstelle 17, 18 begrenzt.

Eine Reihenschaltung aus einer ersten Diode 90, einem dreizehnten Widerstand 91 sowie einem sechsten Kondensator 92 ist zwischen dem ersten Anschluss 30a und der Zwischenleitung 85 angeordnet. Die Anode der ersten Diode 90 ist dabei mit dem ersten Anschluss 30a verbunden. Parallel zum sechsten Kondensator 92 ist eine fünfte Zenerdiode 93 geschaltet.

Der durch den Feldeffekttransistor 59 gebildete gesteuerte Schalter 58 ist beim Ausführungsbeispiel nach Figur 5 anders als bei der im Zusammenhang mit Figur 4 beschriebenen Ausführungsform zwischen dem ersten Anschluss 30a des Gleichrichters 30 und der Zwischenleitung 85 geschaltet. Da sich der Schutztransistor 80, der auch als Schutzschalter bezeichnet werden könnte, bei zulässigen Gleichspannungswerten an der Busleitung 11 in seinem leitenden Zustand befindet, ist die Zwischenleitung 85 mit der ersten Masse GND1 verbunden, so dass durch Umschalten des gesteuerten Schalters 58 in seinen leitenden Zustand ein Kurzschluss zwischen dem ersten Anschluss 30a und der Zwischenleitung 85 und bei leitendem Schutztransistor 80 somit zwischen dem ersten Anschluss 30a und dem zweiten Anschluss 30b hergestellt werden kann.

Der Steueranschluss und beispielsweise das Gate des gesteuerten Schalters 58 bzw. des Feldeffekttransistors 59 ist über einen vierzehnten Widerstand 94 mit der Zwischenleitung 85 und über einen siebten Kondensator 95 mit dem ersten Anschluss 30a des Gleichrichters 30 verbunden.

Zwischen dem ersten Anschluss 30a des Gleichrichters 30 und der Zwischenleitung 85 ist außerdem eine Reihenschaltung eines fünfzehnten Widerstands 96 und einer fünften Zenerdiode 97 vorgesehen. Die Basis eines fünften Transistors 98, beispielsgemäß eines npn-Bipolartransistors, ist mit der Kathode der fünften Zenerdiode 97 verbunden. Der Emitter des fünften Transistors 98 ist über einen sechzehnten Widerstand 99 mit der Zwischenleitung 85 verbunden. Über eine Reihenschaltung aus einer sechsten Zenerdiode 100 und der primärseitigen Diode des erste Optokopplers 39 ist der Kollektor des fünften Transistors 98 mit dem ersten Anschluss 30a des Gleichrichters 30 verbunden.

Der Kollektor des Transistors des zweiten Optokopplers 46 ist mit der Kathode der fünften Zenerdiode 93 verbunden. Der Emitter des Transistors des zweiten Optokopplers 46 ist mit dem Steueranschluss des gesteuerten Schalters 58 und beispielsgemäß als mit dem Gate des Feldeffekttransistors 59 verbunden.

Es sei angenommen, dass die Spannungswerte an der Busleitung 11 und mithin an den Busanschlüssen 19, 20 im zulässigen Wertebereich liegen, so dass der Schutzschalter bzw. Schutztransistor 80 in seinem leitenden Zustand ist. Das Senden und Empfangen von Signalen auf der Busleitung 11 funktioniert im Prinzip analog zur Beschreibung des Ausführungsbeispiels nach Figur 4:

Im Ausgangszustand sei angenommen, das Bussignal Bx dem digitalen Wert "High" entspricht. Der fünfte Transistor 98 ist deswegen ebenfalls in seinem leitenden Zustand, wodurch der erste Optokoppler 39 primärseitig von einem Strom durchflossen wird und mithin an der Empfangsleitung 42 eine Spannung anliegt, die der Versorgungsspannung VC entspricht und mithin das Empfangssignal Rx ebenfalls dem digitalen Wert "High" aufweist.

Veranlasst die Kommunikationssteuereinheit 15 auf der Sendeleitung 47 eine fallende Flanke des Sendesignals Tx, steigt die Spannung am Steuereingang bzw. dem Gate des gesteuerten Schalters 58 an, so dass der gesteuerte Schalter 58 leitend wird, wodurch das Potenzial am ersten Anschluss 30a sinkt, so dass an der Busleitung 11 das Bussignal Bx ebenfalls eine fallende Flanke aufweist.

Da der gesteuerte Schalter 58 leitet, sperrt der fünfte Transistor 98 und somit auch der sekundärseitige Transistor des ersten Optokopplers 39. Das Empfangssignal Rx an der Empfangsleitung 42 hat dadurch ebenfalls eine fallende Flanke.

Weist das Sendesignal Tx im Anschluss wieder eine steigende Flanke auf, geht der gesteuerte Schalter 58 wegen der sinkenden Spannung an seinem Steuereingang wieder in seinen sperrenden Zustand über. Der fünfte Transistor 98 wird leitend und mithin hat auch das Empfangssignal Rx eine steigende Flanke. Auch das Bussignal Bx hat eine steigende Flanke.

Es versteht sich, dass zusätzlich zu den Ausführungsbeispielen gemäß der Figuren 4 und 5 weitere Schnittstellenschaltungen möglich sind. Die kombinierte Schnittstelle 17, 18 beruht dabei im Wesentlichen auf zwei Schaltungsteilen: Ein Schaltungsteil schützt insbesondere der Empfängerschnittstelle 17 vor zu großen Spannungen und/oder Strömen auf der Busleitung 11. Der andere Schaltungsteil mit wenigstens einem gesteuerten Schalter 58 dient dazu, entsprechend dem Zustand des Sendesignals Tx das Busleitungssignal Bx zu verändern. Über den ersten Optokoppler 39 wird entsprechend dem Zustand des Bussignals Bx das Empfangssignal Rx verändert.

Die Erfindung betrifft eine Verfahren und eine Kommunikationssteuereinrichtung 14 zur Feststellung der Verfügbarkeit einer Busleitung 11 für das Übertragen von Daten. Die Kommunikationssteuereinheit weist eine Sendeschnittstelle 17 und eine Empfangsschnittstelle 18 auf, die an einem Controller 15 angeschlossen sind. Bei der Busleitung 11 handelt es sich insbesondere um eine DALI-Busleitung. Bei verfügbarer Busleitung 11 liegt dort ein Bussignal Bx an, das dem digitalen Wert "High" H entspricht. Beim Senden eines Signals wird durch den Controller wiederholt die jeweils aktuelle Signallaufzeit tsf zwischen dem Beginn des Sendens t1 und dem Empfang des gesendeten Datums an der Empfangsschnittstelle 18 bestimmt. Dadurch lassen sich Änderungen der Signallaufzeit durch Umgebungseinflüsse und insbesondere Temperatureinflüsse erfassen. Unter Verwendung insbesondere mehrerer gemessener Signallaufzeiten tsf für eine fallende Flanke und/oder insbesondere mehrerer gemessener Signallaufzeiten tsr für eine steigende Flanke werden durch den Controller 15 jeweils einer Signallaufzeitgröße tmf, tmr durch Filterung und/oder gleitende Mittelwertbildung berechnet. Anhand dieser Signallaufzeitgröße tsf, tsr, kann ein Toleranzzeitraum tz ermittelt werden, innerhalb dem ein über die Sendeschnittstelle 17 gesendetes Datum an die Busleitung 11 übertragen und von dort über die Empfangsschnittstelle 18 wieder empfangen sein muss. Durch Senden eines Abfragesignals AS und Empfangen dieses ausgesendeten Abfragesignals AS innerhalb des Toleranzzeitraums tz kann die Verfügbarkeit der Busleitung 11 für das Senden erkannt werden. Wird nach dem Senden das Abfragesignal AS nicht innerhalb dieses Toleranzzeitraums tz empfangen, wird der Sendevorgang nicht durchgeführt bzw. fortgesetzt, da ansonsten mit einer Kollision von mehreren Datenübertragungen über die Busleitung 11 zu rechnen ist.

Bezugszeichenliste:

| 10 | Kommunikationssystem |
| 11 | Busleitung |
| 12 | Ader |
| 13 | Busabschlusseinheit |
| 14 | Kommunikationssteuereinheit |
| 15 | Controller |
| 16 | Speicher |
| 17 | Sendeschnittstelle |
| 17a | Sendeanschluss |
| 18 | Empfangsschnittstelle |
| 18a | Empfangsanschluss |
| 19 | Busanschluss |
| 20 | Busanschluss |
| 24 | Teilnehmer |
| 30 | Gleichrichter |
| 30a | erster Anschluss |
| 30b | zweiter Anschluss |
| 31 | Sicherung |
| 32 | erster Transistor |
| 33 | erster Widerstand |
| 34 | zweiter Transistor |
| 35 | zweiter Widerstand |
| 39 | erster Optokoppler |
| 40 | erste Zenerdiode |
| 41 | erster Kondensator |
| 42 | Empfangsleitung |
| 43 | dritter Widerstand |
| 44 | zweiter Kondensator |
| 45 | vierten Widerstand |
| 46 | zweiter Optokoppler |
| 47 | Sendeleitung |
| 48 | dritter Kondensator |
| 52 | vierter Kondensator |
| 53 | dritter Transistor |
| 54 | fünften Widerstand |
| 55 | sechsten Widerstand |
| 58 | gesteuerter Schalter |
| 59 | Feldeffekttransistor |
| 70 | siebter Widerststand |
| 71 | zweite Zenerdiode |
| 72 | achter Widerststand |
| 73 | dritte Zenerdiode |
| 74 | neunter Widerststand |
| 75 | vierten Transistor |
| 76 | zehnter Widerstand |
| 77 | elfter Widerstand |
| 80 | Schutztransistor |
| 81 | fünfter Kondensator |
| 82 | vierte Zenerdiode |
| 83 | zwölfter Widerstand |

| | |
|---|---|
| 85 | Zwischenleitung |
| 86 | Schutzwiderstand |
| 87 | Schutzdiode |
| 90 | erste Diode |
| 91 | dreizehnter Widerstand |
| 92 | sechster Kondensator |
| 93 | fünfte Zenerdiode |
| 94 | vierzehnter Widerstand |
| 95 | siebter Kondensator |
| 96 | fünfzehnter Widerstand |
| 97 | fünfte Zenerdiode |
| 98 | fünfter Transistor |
| 99 | sechzehnter Widerstand |
| 100 | sechste Zenerdiode |
| VC | Versorgungsspannung |
| GND1 | erste Masse |
| GND2 | zweite Masse |
| Bx | Bussignal |
| Rx | Empfangssignal |
| Tx | Sendesignal |
| SH | oberer Schwellenwert |
| SL | unterer Schwellenwert |
| D | Sendedauer |
| d1 | erste Zeitdauer |
| d2 | zweite Zeitdauer |
| d3 | dritte Zeitdauer |
| dminf | Mindestverzögerungsdauer der Übertragung einer fallenden Flanke |
| dminr | Mindestverzögerungsdauer der Übertragung einer steigenden Flanke |
| t1 | Startzeitpunkt |
| t2 | zweiter Zeitpunkt |
| t3 | dritter Zeitpunkt |
| t4 | vierter Zeitpunkt |
| t5 | fünfter Zeitpunkt |
| t6 | sechster Zeitpunkt |
| t7 | siebter Zeitpunkt |
| t8 | achter Zeitpunkt |
| tsf | aktuelle Signallaufzeit der Übertragung einer fallenden Flanke |
| tsr | aktuelle Signallaufzeit der Übertragung einer steigenden Flanke |
| tmf | Signallaufzeitgröße der Übertragung einer fallenden Flanke |
| tmr | Signallaufzeitgröße der Übertragung einer steigenden Flanke |
| tz | Toleranzzeitraum abhängig von Sendedauer |
| tzf | Toleranzzeitraum für die Übertragung einer fallende Flanke |
| tzr | Toleranzzeitraum für die Übertragung einer steigenden Flanke |

| | |
|---|---|
| S1 | erster Schritt |
| S2 | zweiter Schritt |
| S3 | dritter Schritt |
| S4 | vierter Schritt |
| S5 | fünfter Schritt |
| S6 | sechster Schritt |
| S7 | siebter Schritt |

**Patentansprüche**

1. Verfahren zur Ermittlung der Verfügbarkeit einer Busleitung (11) für das Übertragen von Daten, an die wenigstens eine Kommunikationssteuereinheit (14) angeschlossen ist, die eine Sendeschnittstelle (17) zum Senden von Daten und eine Empfangsschnittstelle (18) zum Empfangen von Daten aufweist, mit folgenden Schritten:

   - Bestimmen der aktuellen Signallaufzeit (tsf, tsr) zwischen einem Beginn des Sendens (t1) eines Datums durch die Sendeschnittstelle (17) an die Busleitung (11) und dem Empfang (t4) dieses Datums von der Busleitung (11) an der Empfangsschnittstelle (18) durch diese Kommunikationssteuereinheit (14),
   - Ermitteln einer Signallaufzeitgröße (tmf, tmr) unter Verwendung der aktuellen Signallaufzeit (tsf, tsr) in dieser Kommunikationssteuereinheit (14),
   - Verwenden der Signallaufzeitgröße (tmf, tmr) zur Überprüfung, ob die Busleitung (11) verfügbar ist für das Senden von Daten durch diese Kommunikationssteuereinheit (14), indem zu einem Startzeitpunkt (t1) ein Abfragesignal (AS) über die Sendeschnittstelle (17) an die Busleitung (11) übermittelt wird und die Verfügbarkeit der Busleitung (11) erkannt wird, wenn das Abfragesignal (AS) innerhalb eines abhängig von der Signallaufzeitgröße (tmf, tmr) ermittelten Toleranzzeitraums (tz, tzf, tzr) an der Empfangs-schnittstelle (18) dieser Kommunikationssteuer-einheit (14) korrekt empfangen wurde.

2. Verfahren nach Anspruch 1,
   **dadurch gekennzeichnet, dass** vor dem Beginn des Sendens (t1) geprüft wird, ob sich die Busleitung (11) in einem Bereitschaftszustand befindet.

3. Verfahren nach Anspruch 2,
   **dadurch gekennzeichnet, dass** der Bereitschaftszustand der Busleitung (11) erkannt wird, wenn das Bussignal (Bx) einem vorgegebenen Wert entspricht.

4. Verfahren nach einem der vorhergehenden Ansprüche,
   **dadurch gekennzeichnet, dass** zusätzlich geprüft wird, ob die aktuelle Signallaufzeit (tsf, tsr) zumindest so groß ist wie eine vorgegebene oder ermittelte Mindestverzögerungsdauer (dminf, dminr).

5. Verfahren nach einem der vorhergehenden Ansprüche,
**dadurch gekennzeichnet, dass** der für die Überprüfung der Verfügbarkeit der Busleitung (11) verwendete Toleranzzeitraum (tz) zusätzlich abhängig von der Sendedauer (D) des Abfragesignals (AS) ermittelt wird.

6. Verfahren nach Anspruch 5,
**dadurch gekennzeichnet, dass** die Sendedauer (D) des Abfragesignals (AS) fest vorgegeben ist.

7. Verfahren nach einem der vorhergehenden Ansprüche,
**dadurch gekennzeichnet, dass** das Abfragesignal (AS) durch ein digitales Signal gebildet ist.

8. Verfahren nach Anspruch 7,
**dadurch gekennzeichnet, dass** das digitale Abfragesignal (AS) nur ein oder zwei Bit aufweist.

9. Verfahren nach einem der vorhergehenden Ansprüche,
**dadurch gekennzeichnet, dass** wiederholt oder bei jedem Sendevorgang durch die Kommunikationssteuereinheit (14) die aktuelle Signallaufzeit (tsf, tsr) ermittelt wird.

10. Verfahren nach einem der vorhergehenden Ansprüche,
**dadurch gekennzeichnet, dass** aus mehreren aktuellen Signallaufzeiten (tsf, tsr), die bei verschiedenen Sendevorgängen ermittelt wurden, durch eine Filterung oder Mittelwertbildung die Signallaufzeitgröße (tmf, tmr) ermittelt wird.

11. Verfahren nach Anspruch 10,
**dadurch gekennzeichnet, dass** die Mittelwertbildung als gleitende Mittelwertbildung ausgeführt ist.

12. Verfahren nach Anspruch 10 oder 11,
**dadurch gekennzeichnet, dass** die Ermittlung der Signallaufzeitgröße (tmf, tmr) mithilfe einer Tiefpassfilterung erfolgt.

13. Kommunikationssteuereinheit (14) für das Übertragen von Daten über eine Busleitung (11),
mit einer Sendeschnittstelle (17) zum Senden von Daten an die Busleitung (11) und eine Empfangsschnittstelle (18) zum Empfangen von Daten von der Busleitung (11),
mit einem Controller (15), der mit der Sendeschnittstelle (17) der Empfangsschnittstelle (18) und einem Speicher (16) verbunden ist, und der dazu eingerichtet ist, folgende Schritte auszuführen:

- Bestimmen der aktuellen Signallaufzeit (tsf, tsr) zwischen dem Beginn des Sendens eines Datums durch die Sendeschnittstelle (17) an die Busleitung (11) und dem Empfang dieses Datums von der Busleitung (11) an der Empfangsschnittstelle (18),
- Ermitteln einer Signallaufzeitgröße (tmf, tmr) unter Verwendung der aktuellen Signallaufzeit (tsf, tsr),
- Verwenden der Signallaufzeitgröße (tmf, tmr) zur Überprüfung, ob die Busleitung (11) verfügbar ist für das Senden von Daten, indem zu einem Startzeitpunkt (t1) ein Abfragesignal (AS) über die Sendeschnittstelle (17) an die Busleitung (11) übermittelt wird und die Verfügbarkeit der Busleitung (11) erkannt wird, wenn das Abfragesignal (AS) innerhalb eines abhängig von der Signallaufzeitgröße (tmf, tmr) ermittelten Toleranzzeitraums (tz, tzf, tzr) an der Empfangsschnittstelle (18) dieser Kommunikationssteuereinheit (14) korrekt empfangen wurde.

14. Kommunikationssteuereinheit nach Anspruch 13,
**dadurch gekennzeichnet, dass** die Empfangschnittstelle (18) und die Sendeschnittstelle (17) jeweils einen Optokoppler (39, 46) zur galvanischen Trennung des Controllers (15) von der Busleitung (11) aufweist.

**Claims**

1. Method for determining the availability of a bus line (11) for the transmission of data, to which at least one communication control unit (14) is connected that has a transmit interface (17) for transmitting data and a receive interface (18) for receiving data, with the following steps:

• determining the current signal propagation time (tsf, tsr) between a start of transmission (t1) of a data item between the transmit interface (17) to the bus line (11) and the receipt (t4) of this data item from the bus line (11) at the receive interface (18) by this communication control unit (14),
• determining a signal propagation time magnitude (tmf, tmr) using the current signal propagation time (tsf, tsr) in this communication control unit (14),
• using the signal propagation time magnitude (tmf, tmr) to check whether the bus line (11) is available for the transmission of data through this communication control unit (14), in that an interrogation signal (AS) is transferred at a start time (t1) via the transmit interface (17) to the bus line (11) and the availability of the bus line (11) is recognised when the interrogation signal (AS) has been correctly received at the receive interface (18) of this communication control unit (14) within a tolerance time period (tz, tzf, tzr) determined in dependence on the signal propagation time magnitude (tmf, tmr).

2. Method according to claim 1, **characterised in that** before the start of transmission (t1) it is checked whether the bus line (11) is in a ready state.

3. Method according to claim 2, **characterised in that** the ready state of the bus line (11) is recognised when the bus signal (Bx) corresponds to a predefined value.

4. Method according to one of the preceding claims, **characterised in that** it is additionally checked whether the current signal propagation time (tsf, tsr) is at least as long as a predefined or determined minimum delay period (dminf, dminr).

5. Method according to one of the preceding claims, **characterised in that** the tolerance time period (tz)used for checking the availability of the bus line (11) is additionally determined in dependence on the transmission period (D) of the interrogation signal (AS).

6. Method according to claim 5, **characterised in that** the transmission period (D) of the interrogation signal (AS) is fixedly predefined.

7. Method according to one of the preceding claims, **characterised in that** the interrogation signal (AS) is formed by a digital signal.

8. Method according to claim 7, **characterised in that** the digital interrogation signal (AS) has only one or two bits.

9. Method according to one of the preceding claims, **characterised in that** the current signal propagation time (tsf, tsr) is determined repeatedly or upon each transmission process by the communication control unit (14).

10. Method according to one of the preceding claims, **characterised in that** the signal propagation time magnitude (tmf, tmr) is determined from multiple current signal propagation times (tsf, tsr), which have been determined in different transmission processes, by a filtering operation or averaging.

11. Method according to claim 10, **characterised in that** the averaging is conducted as a moving average operation.

12. Method according to claim 10 or 11, **characterised in that** the determination of the signal propagation time magnitude (tmf, tmr) is achieved with the aid of a low-pass filtering operation.

13. Communication control unit (14) for the transmission of data via a bus line (11), with a transmit interface (17) for transmitting data to the bus line (11) and a receive interface (18) for receiving data from the bus line (11), with a controller (15), which is connected to the transmit interface (17), the receive interface (18) and a memory (16), and which is fitted to perform the following steps:

 • determining the current signal propagation time (tsf, tsr) between the start of transmission of a data item by the transmit interface (17) to the bus line (11) and the receipt of this data item from the bus line (11) at the receive interface (18),
 • determining a signal propagation time magnitude (tmf, tmr) using the current signal propagation time (tsf, tsr),
 • using the signal propagation time magnitude (tmf, tmr) to check whether the bus line (11) is available for the transmission of data, in that an interrogation signal (AS) is transferred at a start time (t1) via the transmit interface (17) to the bus line (11) and the availability of the bus line (11) is recognised when the interrogation signal (AS) has been correctly received at the receive interface (18) of this communication control unit (14) within a tolerance time period (tz, tzf, tzr) determined in dependence on the signal propagation time magnitude (tmf, tmr).

14. Communication control unit according to claim 13, **characterised in that** the receive interface (18) and the transmit interface (17) respectively have an optocoupler (39, 46) for electrically decoupling the controller (15) from the bus line (11).

**Revendications**

1. Procédé de détermination de la disponibilité d'une ligne de bus (11) pour la transmission de données, à laquelle est connectée au moins une unité de contrôle de communication (14) qui présente une interface d'émission (17), destinée à émettre des données, et une interface de réception (18) destinée à recevoir des données, le procédé, comprenant les étapes suivantes :

 - détermination du temps de parcours de signal actuel (tsf, tsr) entre un début de l'émission (t1) d'une donnée par l'interface d'émission (17) à la ligne de bus (11) et la réception (t4) de ladite donnée depuis la ligne de bus (11) à l'interface de réception (18), par ladite unité de contrôle de communication (14),

- calcul d'une grandeur de temps de parcours de signal (tmf, tmr), en utilisant le temps de parcours de signal actuel (tsf, tsr) dans ladite unité de contrôle de communication (14),

- utilisation de la grandeur de temps de parcours de signal (tmf, tmr) pour vérifier si la ligne de bus (11) est disponible pour l'émission de données par ladite unité de contrôle de communication (14), par le fait qu'à un instant de début (t1) un signal d'interrogation (AS) est transmis à la ligne de bus (11), via l'interface d'émission (17), et la disponibilité de la ligne de bus (11) est détectée si le signal d'interrogation (AS) a été correctement reçu à l'interface de réception (18) de ladite unité de contrôle de communication (14) en l'espace d'un intervalle de temps de tolérance (tz, tzf, tzr) déterminé en fonction de la grandeur de temps de parcours de signal (tmf, tmr).

2. Procédé selon la revendication 1, **caractérisé en ce qu'**avant le début de l'émission (t1), on vérifie si la ligne de bus (11) est en état d'attente.

3. Procédé selon la revendication 2, **caractérisé en ce que** l'état d'attente de la ligne de bus (11) est détecté, si le signal de bus (Bx) correspond à une valeur prédéfinie.

4. Procédé selon l'une des revendications précédentes, **caractérisé en ce que** l'on vérifie en plus, si le temps de parcours de signal actuel (tsf, tsr) est au moins aussi grand qu'une durée de temporisation (dminf, dminr) prédéfinie ou déterminée.

5. Procédé selon l'une des revendications précédentes, **caractérisé en ce que** l'intervalle de temps de tolérance (tz) utilisé pour la vérification de la disponibilité de la ligne de bus (11) est déterminé en plus en fonction de la durée d'émission (D) du signal d'interrogation (AS).

6. Procédé selon la revendication 5, **caractérisé en ce que** la durée d'émission (D) du signal d'interrogation (AS) est préétablie de manière fixe.

7. Procédé selon l'une des revendications précédentes, **caractérisé en ce que** le signal d'interrogation (AS) est constitué d'un signal numérique.

8. Procédé selon la revendication 7, **caractérisé en ce que** le signal d'interrogation (AS) numérique ne présente qu'un ou deux bits.

9. Procédé selon l'une des revendications précédentes, **caractérisé en ce que** le temps de parcours de signal actuel (tsf, tsr) est déterminé de façon répétée ou lors de chaque opération d'émission par l'unité de contrôle de communication (14).

10. Procédé selon l'une des revendications précédentes, **caractérisé en ce que** la grandeur de temps de parcours de signal (tmf, tmr) est calculée par filtrage ou calcul de la valeur moyenne, à partir de plusieurs temps de parcours de signal actuels (tsf, tsr) qui ont été déterminés lors de différentes opérations d'émission,.

11. Procédé selon la revendication 10, **caractérisé en ce que** le calcul de la valeur moyenne s'effectue selon la méthode des moyennes mobiles.

12. Procédé selon la revendication 10 ou 11, **caractérisé en ce que** le calcul de la grandeur de temps de parcours de signal (tmf, tmr) est effectué à l'aide d'un filtrage passe-bas.

13. Unité de contrôle de communication (14) pour la transmission de données via une ligne de bus (11), comprenant une interface d'émission (17), destinée à envoyer des données à la ligne de bus (11), et une interface de réception (18) destinée à recevoir des données depuis la ligne de bus (11), comprenant un contrôleur (15) qui est relié à l'interface d'émission (17), à l'interface de réception (18) et à une mémoire (16), et qui est conçu pour exécuter les étapes suivantes :

   - détermination du temps de parcours de signal actuel (tsf, tsr) entre le début de l'émission d'une donnée par l'interface d'émission (17) à la ligne de bus (11) et la réception de ladite donnée depuis la ligne de bus (11) à l'interface de réception (18),
   - calcul d'une grandeur de temps de parcours de signal (tmf, tmr) en utilisant le temps de parcours de signal actuel (tsf, tsr),
   - utilisation de la grandeur de temps de parcours de signal (tmf, tmr) pour vérifier si la ligne de bus (11) est disponible pour l'émission de données, par le fait qu'à un instant de début (t1) un signal d'interrogation (AS) est transmis à la ligne de bus (11), via l'interface d'émission (17), et la disponibilité de la ligne de bus (11) est détectée si le signal d'interrogation (AS) a été correctement reçu à l'interface de réception (18) de ladite unité de contrôle de communication (14) en l'espace d'un intervalle de temps de tolérance (tz, tzf, tzr) déterminé en fonction de la grandeur de temps de parcours de signal (tmf, tmr).

14. Unité de contrôle de communication selon la revendication 13, **caractérisée en ce que** l'interface de réception (18) et l'interface d'émission (17) présentent respectivement un optocoupleur (39, 46) destinés à isoler galvaniquement le contrôleur (15) vis-à-vis de la ligne de bus (11).

Fig.1

Fig.2

Fig.3

Fig.4

EP 2 713 680 B1

Fig.5

EP 2 713 680 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007013758 A1
- WO 2006010416 A2